# EUROPEAN PATENT APPLICATION

(11) **EP 1 134 152 A2**
(43) Date of publication of application: **19.09.2001**
(21) Application number: 01200961.9
(22) Date of filing: 14.03.2001
(51) Int. Cl.: B62J 17/04

(54) **Final drive protector**

(30) Priority: 15.03.2000 GB 0006313
(71) Applicant: Blanchard, Mark, New Romney, Kent TN28 8SP (GB)
(72) Inventor: Blanchard, Mark, New Romney, Kent TN28 8SP (GB)

(57) **Abstract**

This invention relates to a motorcycle final drive protector.

Motorcycles are well known vehicles, which comprise a two wheeled chassis, one of which is driven by a system of chain and sprockets or belt and toothed pulleys (and for certain models shaft and bevel gears) to propel the vehicle.

Most motorcycles have a small protector fitted mainly as a mandatory safety feature which serves to protect neither the chain or sprockets (or belt and pulleys) from debris when the motorcycle is in use.

According to the present invention there is provided a split main casing and split covers to enclose the final drive components (chain/belt/sprockets/pulleys) which can be fitted to any motorcycle for which it has been uniquely tailored without necessitating modifications to the machine other than in some instances the removal of the original "chain guard".

## Description

A final drive protector for motorcycles, where an upper and lower casing and split front cover serve to help protect the final drive train (chain and sprockets or belt and pulleys) from ingress of road dirt, and egress of chain lubricant. The complete assembly is removably attached to the swinging arm of the motorcycle by way of brackets specifically tailored for each make, model and year of machine. The front covers are removably attached to each upper and lower half main casing by way of fasteners located along the periphery of each half of the split cover which locate in suitable locations on each upper and lower half main casing.

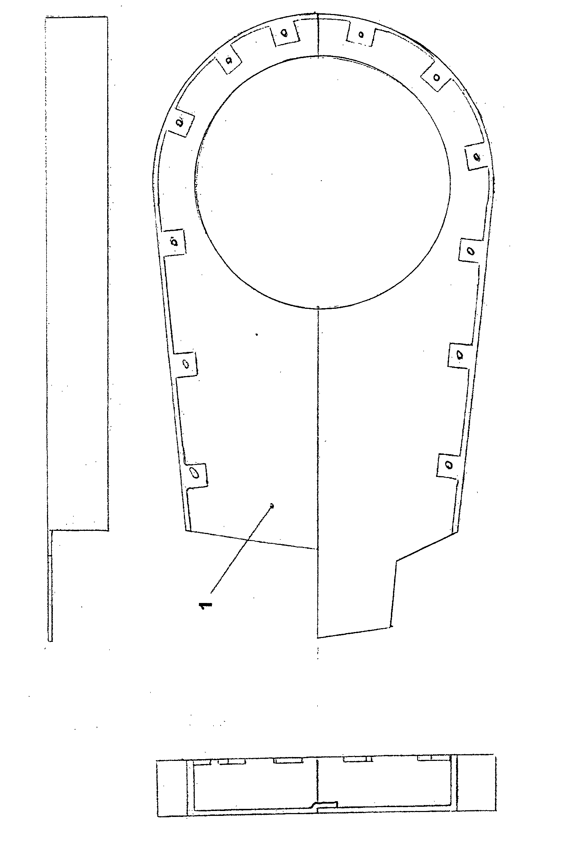

A specific embodiment of the invention will now be described by way of example, with reference to the accompanying drawings from 1/4 through to 4/4 in which:-
- Drawing 1/4 shows side, plan and end views of the split main casing assembly.

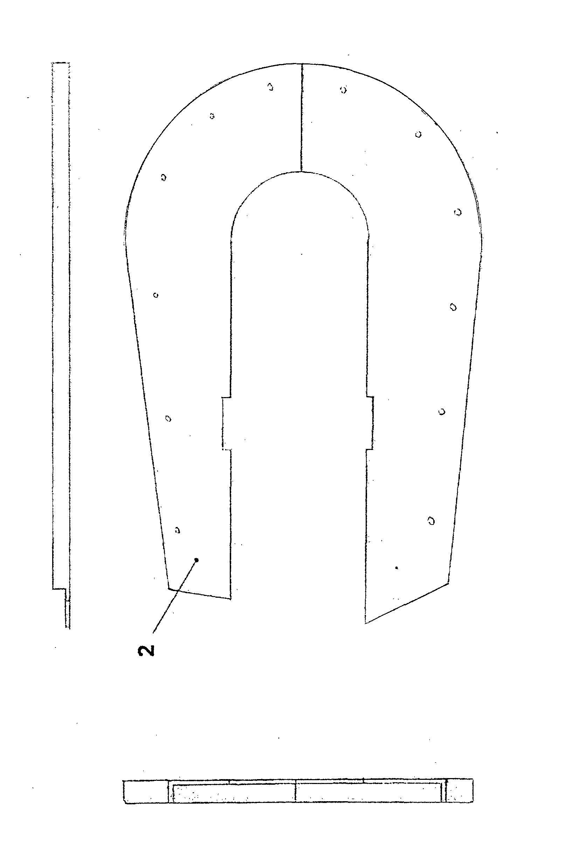

- Drawing 2/4 shows side, plan and end views of the split front cover.

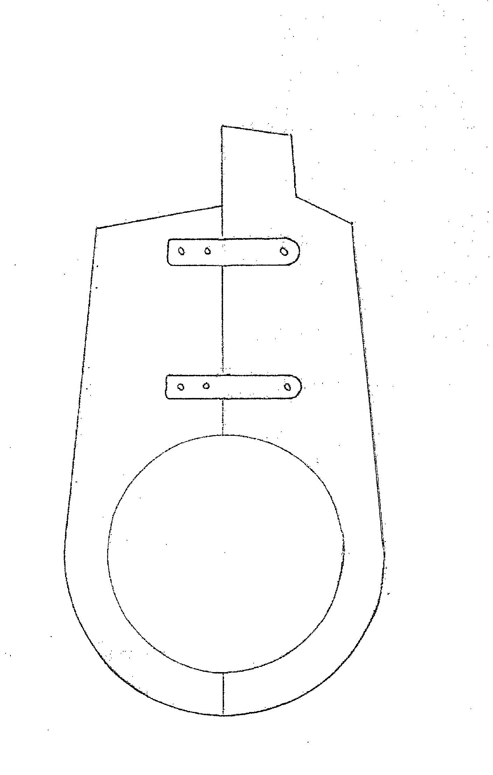

- Drawing 3/4 shows a side view of the back (which faces inwardly when fitted) side of the split main casing.
- Drawing 4/4 shows an assembly of the split main casing and a cut-away view of the split front cover as fitted to a typical motorcycle swinging arm by way of suitably tailored brackets (incorporating the clearly shown angle, and stirrup brackets). A sprocket has been shown, however the drive may be of the toothed belt and toothed pulley arrangement.

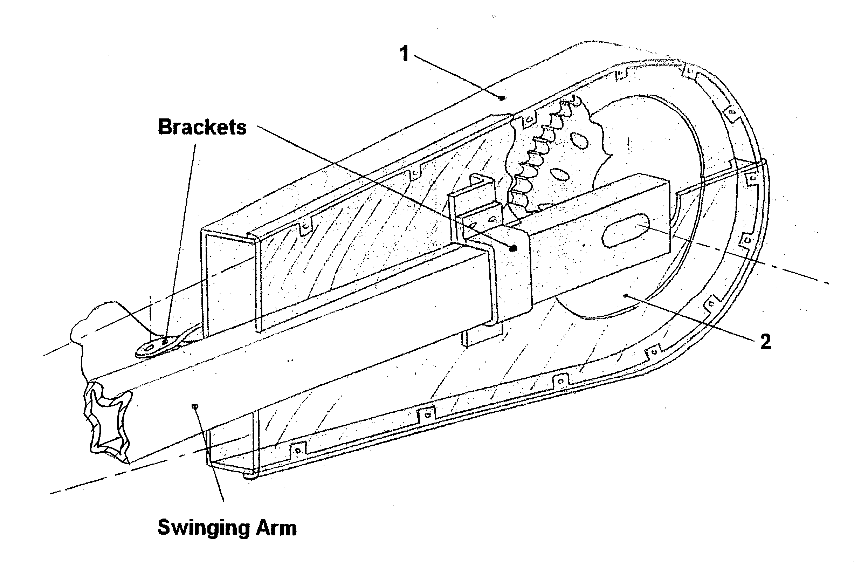

Referring to drawing 4/4 the final drive protector comprises a main casing 1 which is split along it's mid point to enable fitment/removal without the need for removal of chassis components from the motorcycle to which it is intended for. There exists an aperture of suitable dimensions to accommodate the hub/sprocket carrier of the motorcycle to which it is intended for. Shown also is the angle bracket which supports each upper and lower half main casing and is in turn connected to the stirrup bracket which serves to clamp the unit to the swinging arm of the motorcycle to which it is intended for. Shown also is the split front cover 2 which contacts the upper and lower faces of the swinging arm so as to provide a seal to the ingress of debris and egress of chain lubricant.

## Claims

1. A motorcycle final drive protector comprising upper and lower parts with respect to the swinging arm of a motorcycle, with both parts being attached to the swinging arm by means of a single angle bracket, which in turn is attached to the swinging arm by means of a stirrup bracket, and a cover split into upper and lower parts with both parts being attached to the main casing.

2. A motorcycle final drive protector as claimed in claim 1 which incorporates a split cover comprising upper and lower halves which are formed so as to straddle the swinging arm of the motorcycle, contacting the swinging arm on it's upper and lower faces so as to provide an effective seal against ingress of debris and egress of chain lubricant.

3. A motorcycle final drive protector as claimed in claim 1 and claim 2 where each upper and lower front cover have a suitably tailored relief to provide clearance and suitable fitment around the stirrup bracket clamping the assembly to the swinging arm of the motorcycle.

4. A motorcycle final drive protector as claimed in claim 1 and claim 2 and claim 3 where each front cover half is attached to each main casing half by way of fasteners around the periphery locating in tabs on the main casing halves.

5. A motorcycle final drive protector as claimed in claim 1 and claim 2 and claim 3 and claim 4 where brackets are attached to the top main casing on the back side, and extend downwards to removably attach to the bottom main casing on the back side so as to provide rigidity between upper and lower casings.
